# EUROPEAN PATENT APPLICATION

(11) **EP 3 451 040 A1**
(43) Date of publication of application: **06.03.2019**
(21) Application number: 17789066.2
(22) Date of filing: 28.02.2017
(51) Int. Cl.: G02B 21/00, G02B 13/00, G02B 21/36

(54) **OPTICAL UNIT AND METHOD FOR ADJUSTING OPTICAL UNIT**

(30) Priority: 28.04.2016 JP 2016090873
(71) Applicant: Hamamatsu Photonics K.K., Hamamatsu-shi, Shizuoka 435-8558 (JP)
(72) Inventor: TERADA Hirotoshi, Hamamatsu-shi Shizuoka 435-8558 (JP); MATSUDA Shunsuke, Hamamatsu-shi Shizuoka 435-8558 (JP); ITO Katsuhide, Hamamatsu-shi Shizuoka 435-8558 (JP)
(74) Representative: Hoffmann Eitle
(86) International application number: PCT/JP2017/007924
(87) International publication number: WO 2017/187777

(57) **Abstract**

An optical unit (1) includes a relay optical system (5) configured to relay a primary image forming surface of an optical microscope (2) to a secondary image forming surface of a side of an imaging device (3), an optical element holder (6) disposed on an optical axis in the relay optical system (5), a field lens disposition portion (7) configured to dispose a field lens (16) on the optical axis on a front stage side of the optical element holder (6), and a Bertrand lens insertion/extraction portion (8) configured to dispose a Bertrand lens (19) on the optical axis on a rear stage side of the optical element holder (6) so that insertion and extraction of the Bertrand lens are possible.

## Description

### Technical Field

The present invention relates to an optical unit and a method of adjusting an optical unit.

### Background Art

Conventionally, in the field of image observation using an optical microscope, an optical element such as a phase mask is disposed at a pupil conjugate position of a microscope optical system and an output image according to characteristics of the optical element is acquired by an imaging device. In a general optical microscope, an exit pupil position of an objective lens is positioned inside the objective lens. Therefore, a configuration in which a relay optical system is disposed on an imaging port of the optical microscope, a primary image forming surface of a sample is relayed to a secondary image forming surface of an imaging device side, the pupil of the objective lens is projected onto the relay optical system, and the optical element is disposed at a projected pupil position has been examined (for example, refer to Patent Literature 1 and 2).

### Citation List

### Patent Literature

[Patent Literature 1] Japanese Unexamined Patent Publication No. 2002-90654
[Patent Literature 2] Japanese Unexamined Patent Publication No. 2008-64933

### Summary of Invention

### Technical Problem

In order to simply realize the configuration in which an optical element is disposed at the pupil position of the objective lens projected onto the relay optical system, using an optical unit in which such a configuration is unitized may be considered. In many optical microscopes, there are concerns that the exit pupil that the pupil of the objective lens is viewed from an imaging port side may be displaced according to the type or the like of the microscope or the objective lens. In actual measurements, large variation for each of optical microscopes has been confirmed, such as the exit pupil position in one optical microscope being in a range of -2830 mm to - 1550 mm and the exit pupil position in another optical microscope being in a range of + 330 mm to + 1790 mm.

Therefore, in order to enable the optical unit to be applied to various optical microscopes, it is necessary to secure a large adjustment range for the optical element. In order to expand the adjustment range for the optical element, a configuration increasing a distance between a collimation lens and a focus lens configuring the relay optical system or increasing a diameter of the focus lens is necessary. However, in a case where such a configuration is adopted, there is concern that the optical unit will become too large in size and usability when connecting to an optical microscope will deteriorate.

The present invention has been made to solve the above-described problems, and an object of the present invention is to provide an optical unit and a method of adjusting an optical unit in which a disposition position of an optical element with respect to various exit pupil projection positions is able to be adjusted easily while avoiding an increase in size.

### Solution to Problem

An optical unit according to an aspect of the present invention is an optical unit optically coupled between an optical microscope and an imaging device. The optical unit includes a relay optical system configured to relay a primary image forming surface of the optical microscope to a secondary image forming surface of an imaging device side, an optical element holder disposed on an optical axis in the relay optical system, a field lens disposition portion configured to dispose a field lens on the optical axis on a front stage side of the optical element holder, and a Bertrand lens insertion/extraction portion configured to dispose a Bertrand lens on the optical axis on a rear stage side of the optical element holder so that insertion and extraction of the Bertrand lens are possible.

In this optical unit, it is possible to dispose the exit pupil projection position of the optical microscope within a certain range on the optical axis in the relay optical system by disposing the field lens on the optical axis on the front stage side of the optical element holder. It is possible to reduce a distance between lenses configuring the relay optical system and a lens diameter by using the field lens and it is possible to avoid increasing a size of the optical unit by reducing a necessary diameter of the optical element to within a certain range. In addition, in this optical unit, it is possible to check the exit pupil projection position through the imaging device by inserting the Bertrand lens on the optical axis on the rear stage side of the optical element holder. Therefore, it is possible to easily adjust the disposition position of the optical element with respect to various exit pupil projection positions.

In addition, the Bertrand lens insertion/extraction portion may have a Bertrand lens displacement portion that displaces a position of the Bertrand lens in an optical axis direction. In this case, it is possible to easily adjust a focus of the imaging device with respect to the exit pupil projection position.

In addition, the Bertrand lens insertion/extraction portion may have a plurality of Bertrand lens holding portions that hold the Bertrand lens, and the Bertrand lens displacement portion may be configured to be capable of being displaced to each of positions of the Bertrand lens holding portions in the optical axis direction. In this case, it is possible to more easily adjust the focus of the imaging device with respect to the exit pupil projection position.

In addition, the field lens disposition portion may have a field lens displacement portion that displaces a position of the field lens in the optical axis direction. Thereby, the adjustment of the exit pupil projection position with respect to the optical axis direction becomes easy.

In addition, the field lens disposition portion may have a plurality of field lens holding portions that hold the field lens, and the field lens displacement portion may be configured to be capable of being displaced to each of positions of the field lens holding portions in the optical axis direction. Thereby, the adjustment of the exit pupil projection position with respect to the optical axis direction becomes easier.

In addition, the optical unit may further include a holder displacement portion configured to displace a position of the optical element holder in at least one of the optical axis direction and an in-surface direction of a surface orthogonal to the optical axis direction. Thereby, it is possible to easily adjust the position of the optical element on an XY plane at the exit pupil projection position.

In addition, the optical unit may further include a light splitting element on the optical axis on the front stage side of the optical element holder. In this case, it is possible to observe light of different wavelengths on the imaging device side.

In addition, a method of adjusting an optical unit according to an aspect of the present invention is a method of adjusting an optical unit that is optically coupled between an optical microscope and an imaging device. The method includes a focus adjustment step of inserting a Bertrand lens on an optical axis on a rear stage side of a position of an optical element holder disposed on the optical axis in a relay optical system and adjusting a focus of the imaging device to the position of the optical element holder, an exit pupil projection position adjustment step of disposing a field lens on the optical axis on a front stage side of the position of the optical element holder and adjusting an exit pupil projection position of the optical microscope to the position of the optical element holder, and a Bertrand lens extraction step of extracting the Bertrand lens from the optical axis in a state in which the exit pupil projection position coincides with the position of the optical element holder.

In this method of adjusting the optical unit, it is possible to dispose the exit pupil projection position of the optical microscope within a certain range on the optical axis in the relay optical system by disposing the field lens on the optical axis on the front stage side of the optical element holder. It is possible to reduce a distance between lenses configuring the relay optical system and a lens diameter by using the field lens and it is possible to avoid increasing a size of the optical unit by reducing a necessary diameter of the optical element to within a certain range. In addition, in this method of adjusting the optical unit, it is possible to check the exit pupil projection position through the imaging device by inserting the Bertrand lens on the optical axis on the rear stage side of the optical element holder. Therefore, it is possible to easily adjust the disposition position of the optical element with respect to various exit pupil projection positions.

In addition, the exit pupil projection position adjustment step may include a step of displacing a position of the field lens along the optical axis direction or a step of changing the field lens to a field lens having a different focal distance. Thereby, the adjustment of the exit pupil projection position with respect to the optical axis direction becomes easy.

In addition, the exit pupil projection position adjustment step may include a step of forming an image of an aperture of the optical microscope on the imaging device. It is possible to use an image forming position of the image of the aperture as the exit pupil projection position by performing adjustment of a condenser lens in the optical microscope in advance.

In addition, the method of adjusting the optical unit may further include an optical element displacement step of disposing an optical element in the optical element holder and displacing the position of the optical element holder in at least one of the optical axis direction and an in-surface direction of a surface orthogonal to the optical axis direction, after the exit pupil projection position adjustment step. Thereby, it is possible to optimize the position of the optical element at the exit pupil projection position.

In addition, a method of adjusting an optical unit according to an aspect of the present invention is a method of adjusting an optical unit that is optically coupled between an optical microscope and an imaging device. The method includes a Bertrand lens insertion step of inserting a Bertrand lens on an optical axis on a rear stage side of a position of an optical element holder disposed on the optical axis in the relay optical system, an exit pupil projection position rough adjustment step of disposing a field lens on the optical axis on a front stage of the position of the optical element holder and adjusting an exit pupil projection position of the optical microscope to a rough adjustment position where the exit pupil projection position of the optical microscope is roughly adjusted with respect to the position of the optical element holder, a focus adjustment step of adjusting a focus of the imaging device to the rough adjustment position, a holder adjustment step of adjusting the position of the optical element holder to the rough adjustment position, and a Bertrand lens extraction step of extracting the Bertrand lens from the optical axis in a state in which the position of the optical element holder coincides with the rough adjustment position.

In this method of adjusting the optical unit, it is possible to dispose the exit pupil projection position of the optical microscope within a certain range on the optical axis in the relay optical system by disposing the field lens on the optical axis on the front stage side of the optical element holder. It is possible to reduce a distance between lenses configuring the relay optical system and a lens diameter by using the field lens and it is possible to avoid increasing a size of the optical unit by reducing a necessary diameter of the optical element to within a certain range. In addition, in this method of adjusting the optical unit, it is possible to check the exit pupil projection position through the imaging device by inserting the Bertrand lens on the optical axis on the rear stage side of the optical element holder. Therefore, it is possible to easily adjust the disposition position of the optical element with respect to various exit pupil projection positions.

In addition, the exit pupil projection position rough adjustment step may include a step of displacing a position of the field lens along the optical axis direction or a step of changing the field lens to a field lens having a different focal distance. Thereby, the rough adjustment of the exit pupil projection position with respect to the optical axis direction becomes easy.

In addition, the exit pupil projection position rough adjustment step may include a step of roughly forming an image of an aperture of the optical microscope on the imaging device. It is possible to use an image forming position of the image of the aperture as the exit pupil projection position by performing adjustment of a condenser lens in the optical microscope in advance. Thereby, the rough adjustment of the exit pupil projection position becomes easy.

In addition, the method of adjusting the optical unit may further include an optical element displacement step of disposing an optical element in the optical element holder and displacing the position of the optical element in at least one of the optical axis direction and an in-surface direction of a surface orthogonal to the optical axis direction, after the exit pupil projection position rough adjustment step. Thereby, it is possible to optimize the position of the optical element at the exit pupil projection position.

In addition, the focus adjustment step may include a step of displacing a position of the Bertrand lens along the optical axis direction or a step of changing the Bertrand lens to a Bertrand lens having a different focal distance. In this case, it is possible to easily adjust the focus of the imaging device with respect to the exit pupil projection position.

In addition, at least one of the steps may be performed while imaging with the imaging device. Thereby, an adjustment procedure of the optical unit becomes simpler.

In addition, the focus adjustment step may include a step of disposing a chart on the optical element holder. Thereby, it is possible to easily adjust the focus of the imaging device with respect to the exit pupil projection position using the chart.

### Advantageous Effects of Invention

According to the optical unit and the method of adjusting the optical unit, it is possible to adjust the disposition position of the optical element with respect to the various exit pupil projection positions while avoiding increasing the size.

### Brief Description of Drawings

FIG. 1 is a diagram illustrating an embodiment of an optical unit.
FIG. 2 is a diagram illustrating a modification example of a field lens disposition portion.
FIG. 3 is a diagram illustrating a modification example of a Bertrand lens disposition portion.
FIG. 4 is a flowchart illustrating a first embodiment of a method of adjusting an optical unit.
FIG. 5 is a diagram illustrating an initial state of a pupil relay of the optical unit.
FIG. 6 is a diagram illustrating an image forming relationship in a focus adjustment step.
FIG. 7 is a diagram illustrating the image forming relationship in a process subsequent to FIG. 6.
FIG. 8 is a diagram illustrating the image forming relationship in an exit pupil projection position adjustment step.
FIG. 9 is a diagram illustrating the image forming relationship in a process subsequent to FIG. 8.
FIG. 10 is a diagram illustrating the image forming relationship in an optical element displacement step.
FIG. 11 is a diagram illustrating the image forming relationship after executing a Bertrand lens extraction step.
FIG. 12 is a flowchart illustrating a second embodiment of a method of adjusting an optical unit.
FIG. 13 is a diagram illustrating an image forming relationship in a Bertrand lens insertion step.
FIG. 14 is a diagram illustrating the image forming relationship in an exit pupil projection position rough adjustment step.
FIG. 15 is a diagram illustrating the image forming relationship in a process subsequent to FIG. 14.
FIG. 16 is a diagram illustrating the image forming relationship in a focus adjustment step.
FIG. 17 is a diagram illustrating the image forming relationship in a holder adjustment step.
FIG. 18 is a diagram illustrating the image forming relationship after executing a Bertrand lens extraction step.
FIG. 19 is a diagram illustrating a modification example of the optical unit.

### Description of Embodiments

Hereinafter, a preferable embodiment of an optical unit and a method of adjusting an optical unit according to an aspect of the present invention will be described in detail with reference to the drawings.

### [Configuration of optical unit]

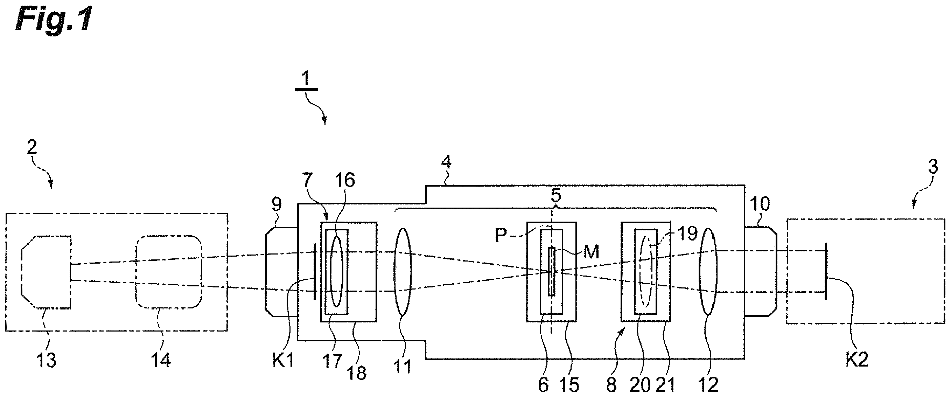

FIG. 1 is a diagram illustrating an embodiment of an optical unit. The optical unit 1 shown in the figure is a unit optically coupled between an optical microscope 2 and an imaging device 3. The optical unit 1 is used for disposing an optical element M such as a phase mask at an exit pupil projection position P of the optical microscope 2 and acquiring an output image according to characteristics of the optical element on a side of the imaging device 3. For example, the optical microscope 2 is a bright field microscope or a fluorescent microscope. For example, the imaging device 3 is a charge coupled device CCD camera or a complementary metal oxide semiconductor (CMOS) camera having a two-dimensional pixel structure.

As shown in FIG. 1, the optical unit 1 includes a relay optical system 5, an optical element holder 6, a field lens disposition portion 7, and a Bertrand lens insertion and extraction unit 8, in a case 4. Such elements are optically coupled to each other. A connection portion 9 with respect to the optical microscope 2 is provided on one end side of the case 4. For example, the connection portion 9 is a C mount, and is connected to a camera port of the optical microscope 2. In addition, a connection portion 10 with respect to the imaging device 3 is provided on the other end side of the case 4. For example, the connection portion 10 is a C mount, and is connected to the imaging device 3.

The relay optical system 5 is an optical system for relaying a primary image forming surface K1 to a secondary image forming surface K2 on the side of the imaging device using the optical microscope 2. The relay optical system 5 includes a collimation lens 11 and a focus lens 12. The collimation lens 11 has a function of relaying an image in combination with the focus lens 12 and a function of relaying the pupil of an objective lens 13 in combination with an image forming lens 14. The collimation lens 11 may be a lens group including a plurality of collimation lenses. Similarly, the focus lens 12 may be a lens group including a plurality of focus lenses.

The optical element holder 6 is a portion that detachably holds the optical element M. The optical element holder 6 is disposed at the exit pupil projection position that is set in advance on an optical axis in the relay optical system 5. The optical element holder 6 has a holder displacement portion 15 that adjusts a position of the optical element holder 6 by displacing the position of the optical element holder 6 in an optical axis direction and an in-surface direction of a surface orthogonal to the optical axis direction. For example, the holder displacement portion 15 is configured by a mount that is manually or automatically driven, and the optical element holder 6 is fixed to the corresponding mount. Examples of the optical element M mounted on the optical element holder 6 include a phase mask, a stair step device (SSD), a cylindrical lens, a prism, a variable focus lens, and the like.

The field lens disposition portion 7 is a portion that disposes a field lens 16 on the optical axis. For example, the field lens disposition portion 7 has a field lens holding portion 17. In addition, the field lens disposition portion 7 has a field lens displacement portion 18 that adjusts a position of the field lens 16 by displacing the position of the field lens 16 in the optical axis direction. For example, the field lens displacement portion 18 may be configured as a mount that is manually or automatically driven, and the field lens holding portion 17 is fixed to this corresponding mount.

The field lens 16 is disposed in a vicinity of the primary image forming surface of the optical microscope 2, using the field lens disposition portion 7. The exit pupil projection position P of the optical microscope 2 is displaced in the optical axis direction by displacing the field lens 16 in the optical axis direction. In addition, it is possible to displace the exit pupil projection position P using the field lenses 16 of which focal distances are different.

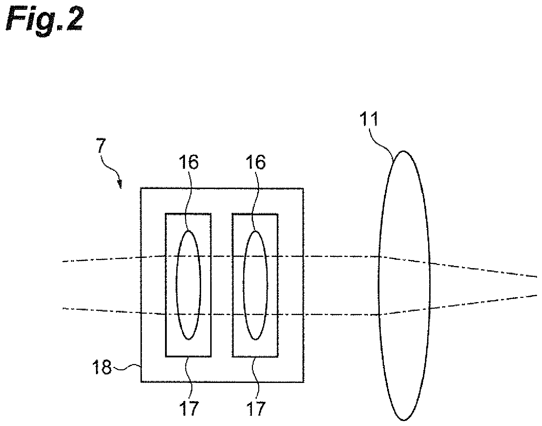

The field lens 16 may be a lens group including a plurality of field lenses. In this case, it is possible to adjust the exit pupil projection position P and an exit pupil size by changing the focal distances of each lens and a gap between the lenses. In a case where the field lens 16 is a lens group, for example, as shown in FIG. 2, it is preferable that the field lens displacement portion 18 be configured to be capable of being displaced to each of positions of the field lens holding portions 17 in the optical axis direction.

The Bertrand lens insertion/extraction portion 8 is a portion for inserting and extracting a Bertrand lens 19 on the optical axis. For example, the Bertrand lens insertion/extraction portion 8 may have a Bertrand lens holding portion 20. In addition, the Bertrand lens insertion/extraction portion 8 has a Bertrand lens displacement portion 21 that adjusts a position of the Bertrand lens 19 by displacing the position of the Bertrand lens 19 in the optical axis direction. For example, the Bertrand lens displacement portion 21 may be configured as a mount that is manually or automatically driven, and the Bertrand lens insertion/extraction portion 8 is fixed to this corresponding mount.

The Bertrand lens 19 is disposed on a rear stage side of the optical element holder 6 by the Bertrand lens insertion/extraction portion 8. In the present embodiment, the position of the Bertrand lens 19 is on a front stage side of the focus lens 12. However, the position of the Bertrand lens 19 may be on a rear stage side of the focus lens 12. It is possible to image the exit pupil projection position P in the imaging device 3, by inserting the Bertrand lens 19 on the optical axis. A user of the optical unit 1 can adjust the optical element holder 6, the field lens 16, or the like while checking an image of the captured exit pupil projection position P using a monitor or the like (not shown) electrically connected to the imaging device 3.

In addition, it is possible to absorb manufacturing error in the focal distance of the lens, manufacturing error in a flange back of the imaging device 3, error due to mechanical accuracy, and the like and to focus the imaging device 3 on a desired surface, by displacing the Bertrand lens 19 in the optical axis direction. It is possible to change a range of an exit pupil surface that may be captured by the imaging device 3, that is, an imaging magnification, by using the Bertrand lenses 19 of which focal distances are different. The imaging magnification is determined by the focal distance of the Bertrand lens 19 and the focus lens 12 and the gap between the lenses. After the adjustment of the field lens 16 and the adjustment of the optical element M are completed, the Bertrand lens 19 is extracted from the optical axis.

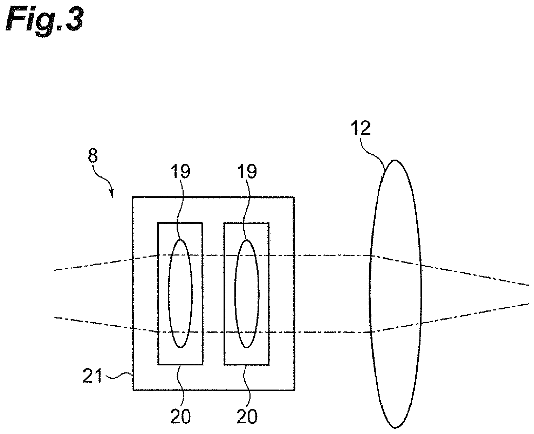

The Bertrand lens 19 may be a lens group including a plurality of Bertrand lenses. In this case, it is possible to more accurately adjust the focus of the imaging device 3 by changing the focal distances of each lens and a gap between the lenses. In a case where the Bertrand lens 19 is a lens group, for example, as shown in FIG. 3, it is preferable that the Bertrand lens displacement portion 21 be configured to be capable of displacing positions of the Bertrand lens holding portions 20 in the optical axis direction.

### [First embodiment of method of adjusting optical unit]

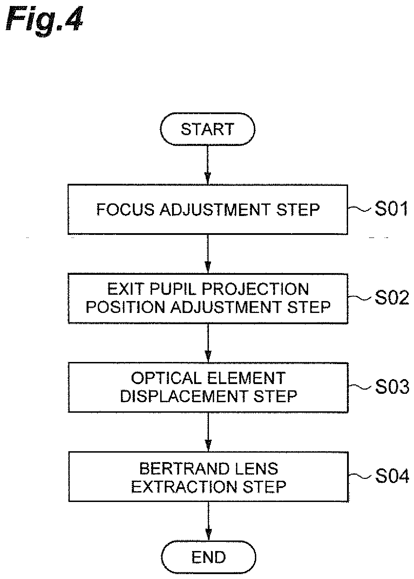

FIG. 4 is a flowchart illustrating the first embodiment of the method of adjusting the optical unit. As shown in the figure, the method of adjusting the optical unit according to the first embodiment includes a focus adjustment step (step S01), an exit pupil projection position adjustment step (step S02), an optical element displacement step (step S03), and a Bertrand lens extraction step (step S04). Such steps may be executed while imaging with the imaging device 3.

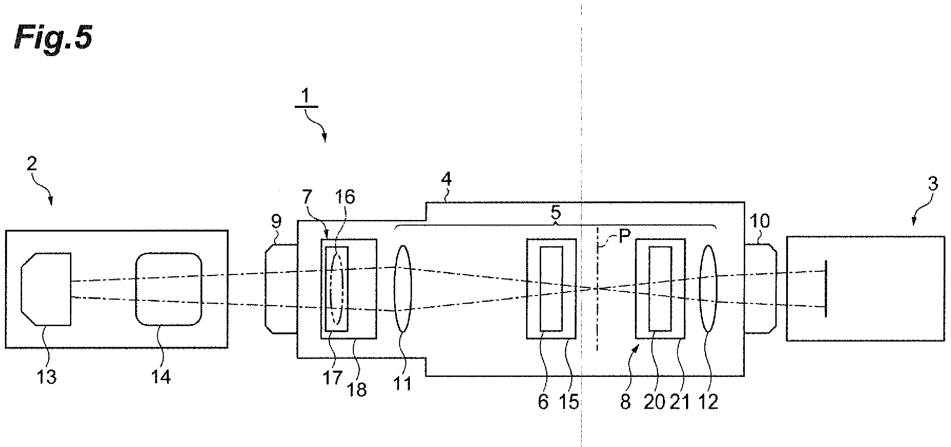

FIG. 5 is a diagram illustrating an initial state of a pupil relay of the optical unit. In this initial state, the Bertrand lens 19 and the optical element M are not installed. In addition, for convenience of description, the field lens 16 is shown using imaginary lines. In the initial state (a state before the adjustment) when the optical unit 1 is connected to the optical microscope 2 and the imaging device 3, there is concern that the exit pupil projection position P may vary according to a type or the like of the objective lens 13. In the example shown in FIG. 5, the exit pupil projection position P is shifted to the rear stage side from the position of the optical element holder 6 in the optical axis direction, that is, the rear stage side from a design position of the exit pupil projection position in the optical axis direction.

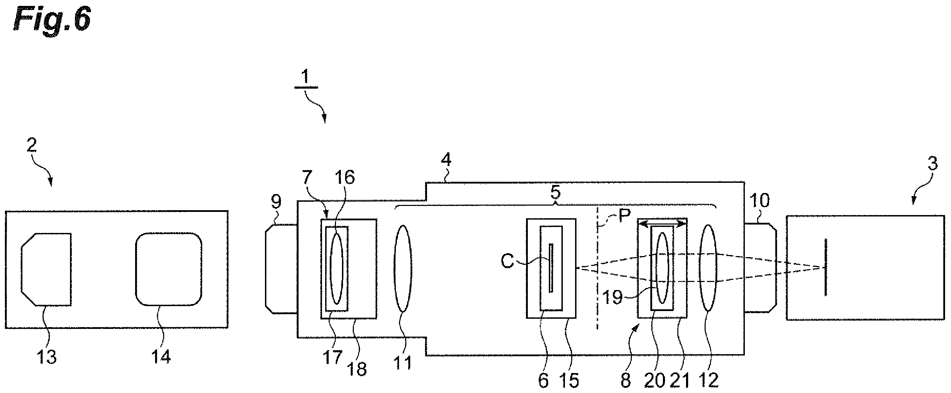

The focus adjustment step is a step of adjusting the focus of the imaging device 3 to the position of the optical element holder 6 by using the Bertrand lens 19. In the focus adjustment step, as shown in FIG. 6, first a chart C is disposed in the optical element holder 6. For example, the chart C is a sheet material on which a test pattern is printed. In a case where the optical element M has non-transparency, the optical element M itself may be disposed in the optical element holder 6 instead of the chart C.

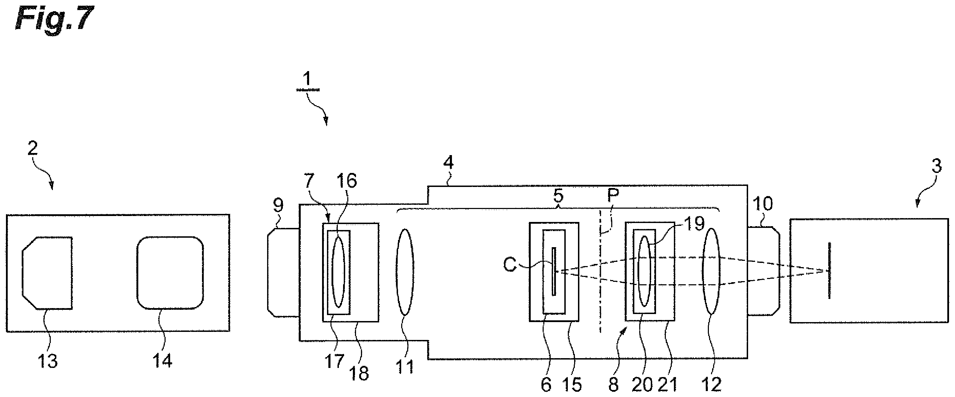

Next, the Bertrand lens 19 is inserted on the optical axis on the rear stage side of the optical element holder 6 by the Bertrand lens insertion/extraction portion 8. The Bertrand lens 19 is selected so that a size of the chart or an exit pupil is suitable for a size of an element of the imaging device 3. Then, the position of the Bertrand lens 19 is adjusted in the optical axis direction by the Bertrand lens displacement portion 21, and as shown in FIG. 7, the focus of the imaging device 3 is made to coincide with the position of the optical element holder 6. Therefore, the imaging device 3 images the position of the optical element holder 6, and the user may observe the position of the optical element holder 6.

After the focus of the imaging device 3 coincides with the position of the optical element holder 6, the chart C is removed from the optical element holder 6. In addition, in the focus adjustment step, instead of the position adjustment of the Bertrand lens 19 by the Bertrand lens displacement portion 21, the Bertrand lens 19 may be replaced with a Bertrand lens having a different focal distance.

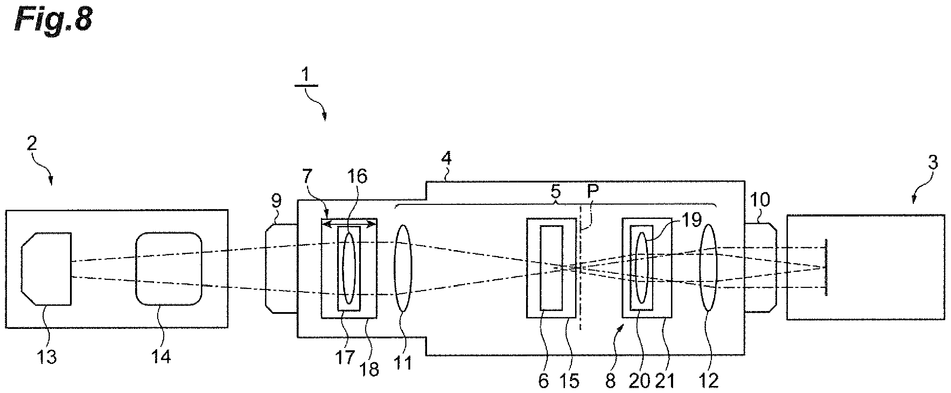

The exit pupil projection position adjustment step is a step of adjusting the exit pupil projection position P of the optical microscope 2 to the position of the optical element holder 6. In the exit pupil projection position adjustment step, first, as shown in FIG. 8, the field lens 16 is disposed on the optical axis on the front stage side of the optical element holder 6 by the field lens disposition portion 7. It is preferable that the position at which the field lens 16 is disposed be in the vicinity of the primary image forming surface by the optical microscope 2.

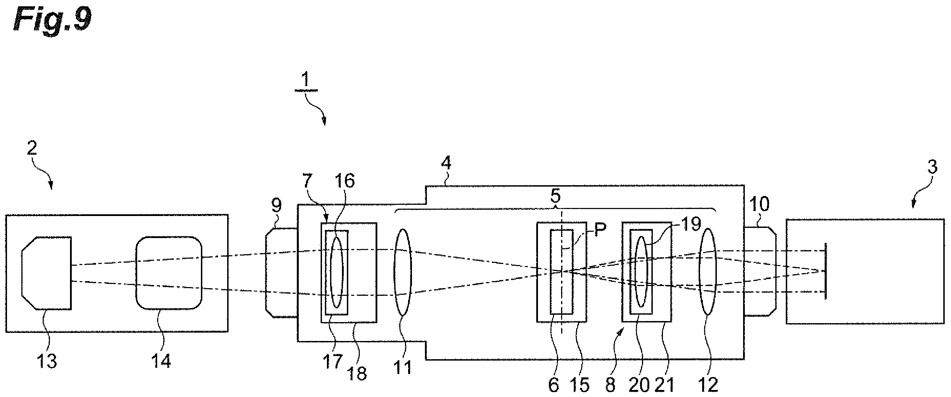

Next, the position of the field lens 16 is adjusted in the optical axis direction by the field lens displacement portion 18, and as shown in FIG. 9, the exit pupil projection position P is coincided with the position of the optical element holder 6. In the adjustment of the field lens 16, for example, it is preferable that an adjustment of a condenser lens in the optical microscope 2 be performed in advance so that an image of a blade member of an aperture in the optical microscope 2 forms an image on the exit pupil of the objective lens 13.

Therefore, it is possible to observe the exit pupil projection position P with the imaging device 3 and adjust the field lens 16 while checking a pupil surface output to a monitor or the like. For example, it is possible to conveniently adjust the field lens 16 by checking whether or not the focus of the imaging device 3 coincides with the blade member of the aperture in a position conjugate with the exit pupil of the objective lens 13 or whether or not the size of the pupil is a minimum. In addition, in the exit pupil projection position adjustment step, instead of the position adjustment of the field lens 16 by the field lens displacement portion 18, the field lens 16 may be replaced with a field lens having a different focal distance.

In addition, in the adjustment of the field lens 16, for example, a diffusion plate may be disposed at a disposition position (for example, on the stage) of a sample in the optical microscope 2. In this case, it may be possible to directly observe the image of the exit pupil of the objective lens 13 at the position of the optical element holder 6 in advance, by irradiating the diffusion plate with light from a light source to generate diffused light and uniformly illuminating the aperture in the objective lens 13 by the corresponding diffused light. The diffusion plate may be a substrate that generates the diffused light. A fluorescent plate may be used as the substrate and fluorescence generated by an irradiation of excitation light from an excitation light source may be used as the diffused light for the illumination. Therefore, it is possible to observe the exit pupil projection position P with the imaging device 3 and adjust the field lens 16 while checking the pupil surface output to the monitor or the like. For example, it is possible to adjust the field lens 16 by directly checking whether or not the focus of the imaging device 3 coincides with the exit pupil of the objective lens 13 or whether or not the size of the pupil is a minimum.

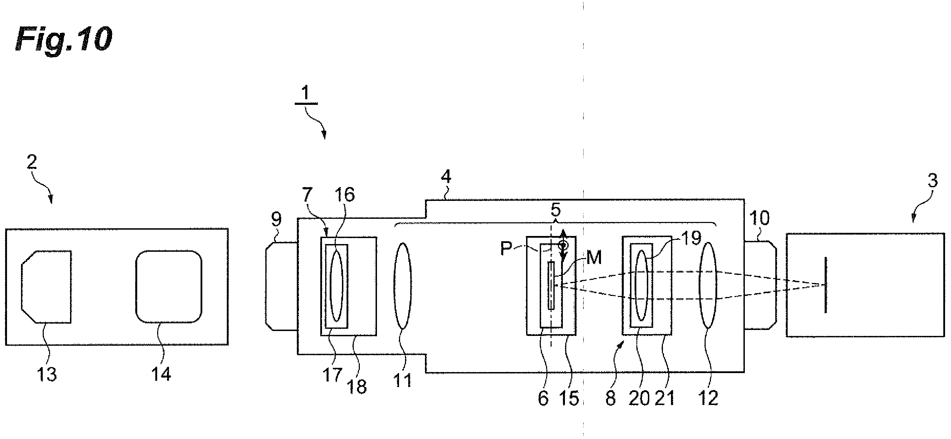

The optical element displacement step is a step of displacing the position of the optical element holder 6 to at least one of the optical axis direction and the in-surface direction of the surface orthogonal to the optical axis direction. In the optical element displacement step, first, the desired optical element M is disposed in the optical element holder 6. In addition, as shown in FIG. 10, the optical element M is displaced in at least one of the optical axis direction and the in-surface direction of the surface orthogonal to the optical axis direction by the holder displacement portion 15, and an XY position and the like of the optical element M and the exit pupil projection position P are optimized.

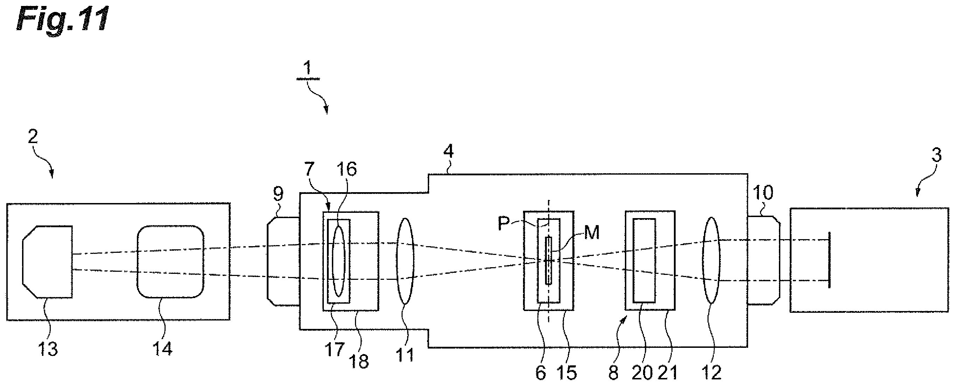

The Bertrand lens extraction step is a step of extracting the Bertrand lens 19 from the optical axis. In a state in which the position of the optical element holder 6 has been coincided with the exit pupil projection position P, the Bertrand lens 19 is extracted from the optical axis by the Bertrand lens insertion/extraction portion 8. Therefore, as shown in FIG. 11, the relay optical system 5 in which the optical element M is disposed at the exit pupil projection position P in a desired state is obtained.

In addition, for example, in a case where a site at which the process up to the exit pupil projection position adjustment step is executed and a site at which the optical element displacement step is executed are different, the Bertrand lens insertion and extraction step may be executed after the execution of the exit pupil projection position adjustment step. Then, before the execution of the optical element displacement step, the Bertrand lens 19 may be inserted into the optical axis again. In addition, in the above example, the focus adjustment step or the optical element displacement step is performed in a state in which the optical element holder 6 is disposed at the position where the optical element holder 6 is disposed, but instead of the optical element holder 6, the chart or the like may be directly fixed to the case 4 at the corresponding position, and after the adjustment, the chart may be replaced with the optical element holder 6.

In the method of adjusting the optical unit as described above, it is possible to dispose the exit pupil projection position P of the optical microscope 2 within a certain range on the optical axis in the relay optical system 5, by disposing the field lens 16 on the optical axis on the front stage side of the optical element holder 6. Since the gap between the lenses configuring the relay optical system 5 and the lens diameter are reduced and a required diameter of the optical element M is reduced to within a certain range by using the field lens 16, it is possible to avoid increasing the size of the optical unit 1. In addition, in the method of adjusting the optical unit, it is possible to check the exit pupil projection position P through the imaging device 3 by inserting the Bertrand lens 19 on the optical axis on the rear stage side of the optical element holder 6. Therefore, it is possible to easily adjust the disposition position of the optical element M with respect to various exit pupil projection positions P.

In the conventional method, a reflecting object such as paper is disposed at a position where the optical element is set, a diameter of a light flux reflected on the reflecting object is visually observed, and it is checked whether or not the exit pupil projection position is positioned at a desired position. On the other hand, in the method of the present embodiment, a mechanism capable of inserting and extracting the Bertrand lens 19 is provided in the optical unit 1. Therefore, it is possible to easily check the exit pupil projection position P by observing the diameter of the light flux and an iris aperture focus through the imaging device 3.

In addition, in principle, it is possible to dispose the Bertrand lens 19 outside the optical unit 1 (on a rear stage side of the connection portion 10). However, since the Bertrand lens insertion/extraction portion 8 is disposed inside the optical unit 1, it is possible to check the exit pupil projection position P without removing the imaging device 3 connected to the connection portion 10. Therefore, it is possible to prevent a position reproducibility of the imaging device 3 deteriorating due to the removal of the imaging device 3. In addition, by using the Bertrand lens 19, in addition to the adjustment of the exit pupil projection position P by the field lens 16, it is also possible to adjust the position of the optical element M through the imaging device 3 and convenience of the optical unit 1 is improved.

### [Second embodiment of method of adjusting optical unit]

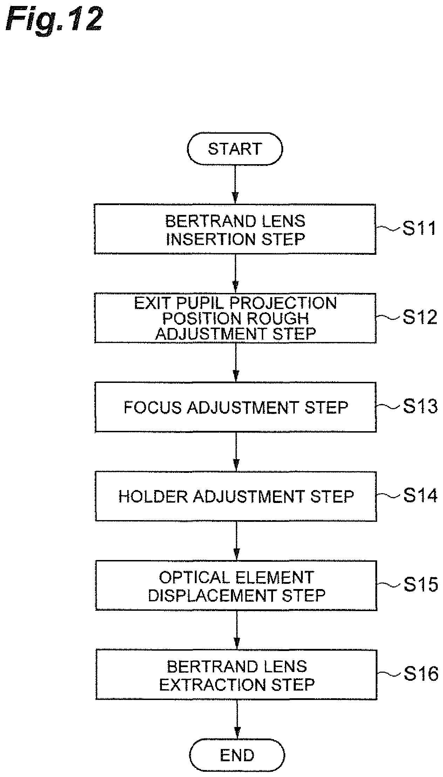

FIG. 12 is a flowchart illustrating the second embodiment of the method of adjusting the optical unit. As shown in the figure, the method of adjusting the optical unit according to the second embodiment includes a Bertrand lens insertion step (step S11), an exit pupil projection position rough adjustment step (step S12), a focus adjustment step (step S13), a holder adjustment step (step S14), an optical element displacement step (step S15), and a Bertrand lens extraction step (step S16). Such steps may be executed while imaging with the imaging device 3.

An initial state of the pupil relay by the optical unit 1 is the same as the state shown in FIG. 5. The exit pupil projection position P is shifted to the rear stage side from the position of the optical element holder 6 in the optical axis direction, that is, the rear stage side from a design position of the exit pupil projection position in the optical axis direction.

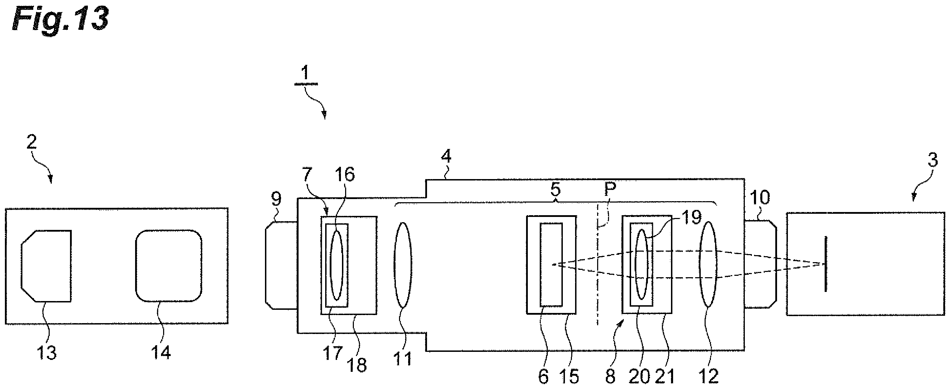

The Bertrand lens insertion step is a step of inserting the Bertrand lens 19 on the optical axis on the rear stage side of the position of the optical element holder 6 disposed on the optical axis in the relay optical system 5. In this step, as shown in FIG. 13, the Bertrand lens 19 is inserted on the optical axis on the rear stage side of the position of the optical element holder 6 by the Bertrand lens insertion/extraction portion 8. In addition, in this step, the Bertrand lens 19 may also be adjusted by displacing the Bertrand lens 19 so that the focus of the imaging device 3 is adjusted to the position of the optical element holder 6 like in the focus adjustment step in the first embodiment described above.

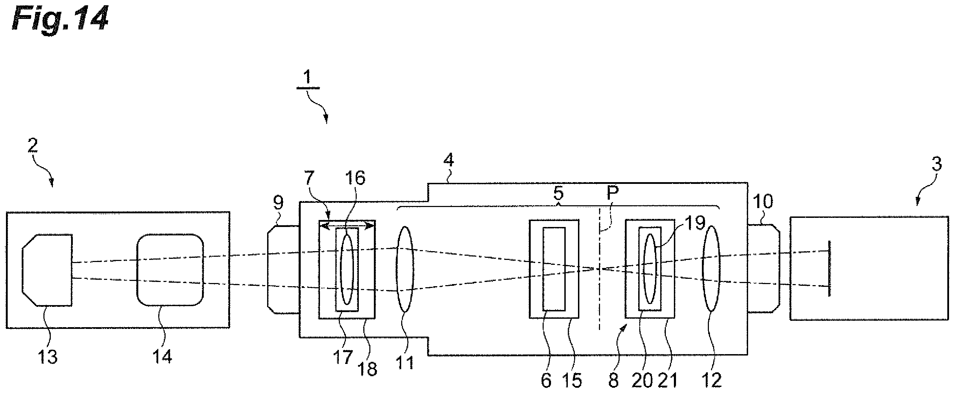

The exit pupil projection position rough adjustment step is a step of roughly adjusting the exit pupil projection position P of the optical microscope 2 with respect to the position of the optical element holder 6. In this step, first, as shown in FIG. 14, the field lens 16 is disposed on the optical axis on the front stage side of the optical element holder 6 by the field lens disposition portion 7. It is preferable that the disposition position of the field lens 16 be in a vicinity of the primary image forming surface of the optical microscope 2.

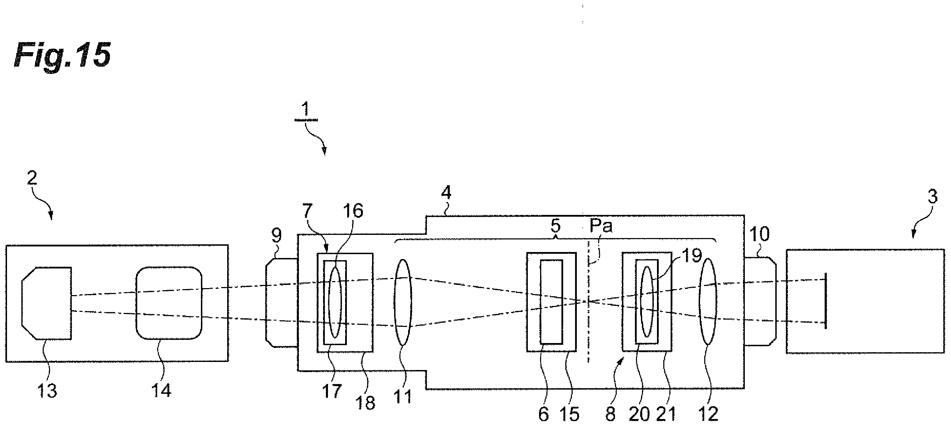

Next, the position of the field lens 16 is adjusted in the optical axis direction by the field lens displacement portion 18, and as shown in FIG. 15, the exit pupil projection position of the optical microscope is adjusted to a rough adjustment position Pa where the exit pupil projection position P is roughly adjusted with respect to the optical element holder 6. In the adjustment of the field lens 16, for example, a position where the image of the blade member of the aperture in the imaging device 3 is somewhat formed may be set as the rough adjustment position Pa. In addition, for example, a position where the image of the exit pupil in the objective lens 13 in the microscope 2 is somewhat formed may be set as the rough adjustment position Pa. In addition, also in the exit pupil projection position rough adjustment step, instead of the position adjustment of the field lens 16 by the field lens displacement portion 18, the field lens 16 may be replaced with a field lens having a different focal distance.

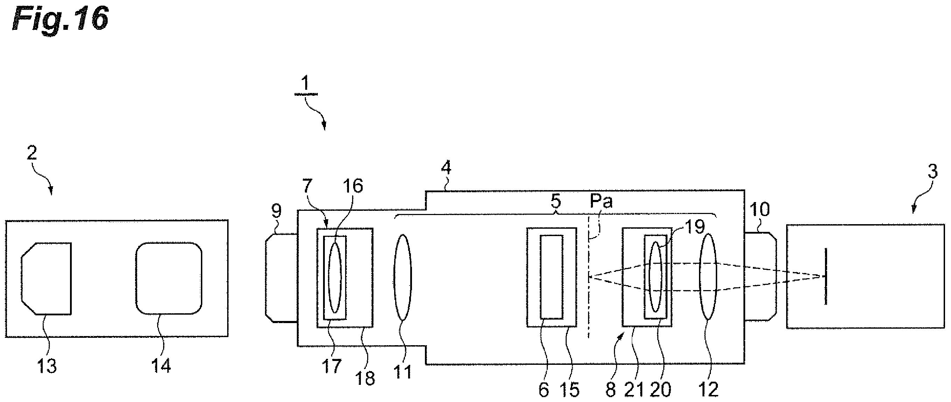

The focus adjustment step is a step of adjusting the focus of the imaging device 3 to the rough adjustment position of the imaging device by using the Bertrand lens 19. In the focus adjustment step, the position of the Bertrand lens 19 is adjusted in the optical axis direction by the Bertrand lens displacement portion 21, and as shown in FIG. 16, the focus of the imaging device 3 is coincided with the rough adjustment position Pa. Therefore, the rough adjustment position Pa may be captured by the imaging device 3, and the user can observe the rough adjustment position Pa. In addition, also in the focus adjustment step, instead of the position adjustment of the Bertrand lens 19 by the Bertrand lens displacement portion 21, the Bertrand lens 19 may be replaced with a Bertrand lens having a different focal distance.

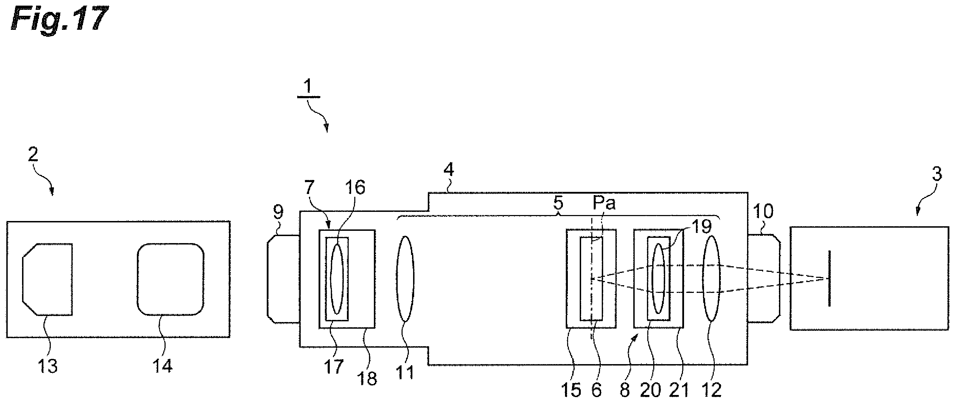

The holder adjustment step is a step of adjusting the position of the optical element holder 6 to the rough adjustment position Pa. In the holder adjustment step, as shown in FIG. 17, the optical element M is finely adjusted in the optical axis direction by the holder displacement portion 15, and the position of the optical element holder 6 is coincided with the rough adjustment position Pa (the exit pupil projection position P positioned at the rough adjustment position Pa).

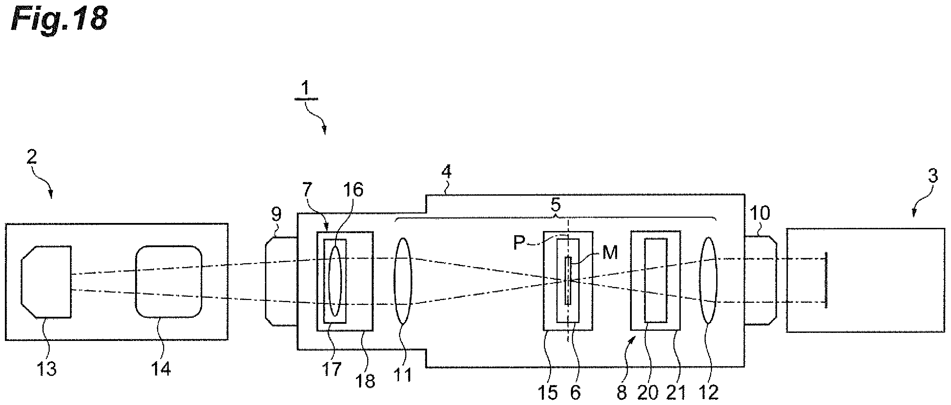

The optical element displacement step and the Bertrand lens extraction step are the same as those in the first embodiment. After optimizing the XY position of the optical element M and the exit pupil projection position P and the like, the Bertrand lens 19 is extracted from the optical axis. Therefore, as shown in FIG. 18, the relay optical system 5 in which the optical element M is disposed at the exit pupil projection position P in a desired state is obtained.

In addition, also in the second embodiment, for example, in a case where a site at which the process up to the holder adjustment step is executed and a site at which the optical element displacement step is executed are different, the Bertrand lens insertion and extraction step may be executed after the execution of the holder adjustment step. Then, before the execution of the optical element displacement step, the Bertrand lens 19 may be inserted into the optical axis again. In addition, in the second embodiment, after the exit pupil projection position rough adjustment step of displacing the field lens so that the exit pupil projection position P is roughly adjusted to the rough adjustment position Pa, the focus adjustment step of displacing the Bertrand lens so that the focus of the imaging device 3 is adjusted to the rough adjustment position Pa is performed. However, the adjustment may be performed by reversing an execution sequence of the exit pupil projection position rough adjustment step and the focus adjustment step.

Also in the method of adjusting the optical unit as described above, the same advantageous effects as in the first embodiment are obtained. That is, it is possible to dispose the exit pupil projection position P of the optical microscope 2 within a certain range on the optical axis in the relay optical system 5, by disposing the field lens 16 on the optical axis on the front stage side of the optical element holder 6. Since the gap between the lenses configuring the relay optical system 5 and the lens diameter are reduced and a required diameter of the optical element M is reduced within a certain range by using the field lens 16, it is possible to avoid increasing the size of the optical unit 1. In addition, in the method of adjusting the optical unit, it is possible to check the exit pupil projection position P through the imaging device 3 by inserting the Bertrand lens 19 on the optical axis on the rear stage side of the optical element holder 6. Therefore, it is possible to easily adjust the disposition position of the optical element M with respect to various exit pupil projection positions P.

In addition, in the second embodiment, the adjustment of the exit pupil projection position P is performed not only by the adjustment of the field lens 16 but also by the rough adjustment by the field lens 16 and the adjustment of the optical element holder 6. Therefore, it is unnecessary to provide a wide variety of field lenses 16, and the convenience of the optical unit 1 is improved.

### [Modification example of optical unit]

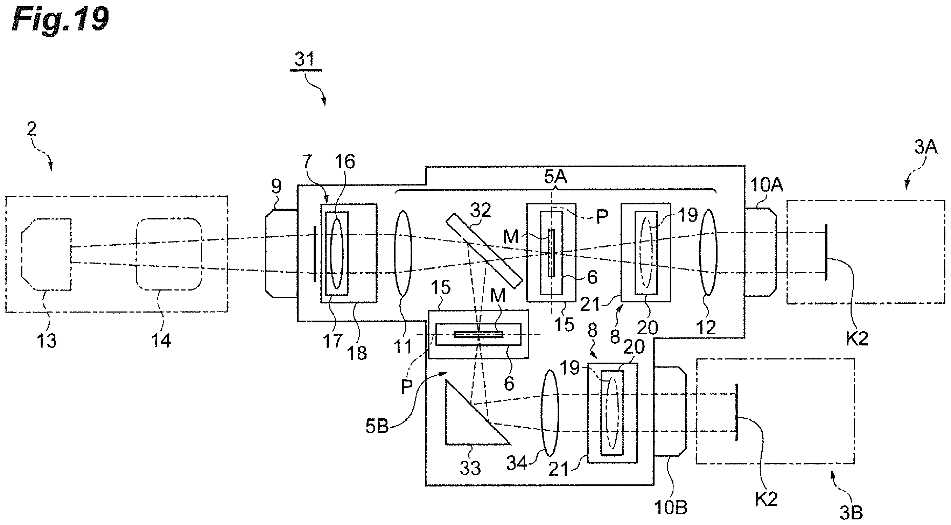

FIG. 19 is a diagram illustrating a modification example of the optical unit. As shown in the figure, the optical unit 31 according to the modification example is different from the optical unit 1 described in the above embodiment in that light of two different wavelengths is able to be observed by two imaging devices 3A and 3B.

The imaging device 3A is, for example, an imaging device corresponding to light of a long wavelength, and the imaging device 3B is, for example, an imaging device corresponding to light of a short wavelength. On the other end side of the case 4 of the optical unit 1, each of a connection portion 10A with respect to the imaging device 3A and a connection portion 10B with respect to the imaging device 3B is provided.

In addition, in addition to the constituents of the optical unit 1 described above, the optical unit 31 further includes a light splitting element 32, a reflection mirror 33, and a focus lens 34. The light splitting element 32 is, for example, a dielectric multilayer film mirror such as a dichroic mirror or a dichroic prism. For example, the light splitting element 32 is configured to transmit the light of the long wavelength and reflect the light of the short wavelength. It is possible to split the light from the optical microscope 2 into light beams having different wavelengths by the light splitting element 32 and capture each of the light beams with the imaging devices 3A and 3B.

The reflection mirror 33 reflects the light reflected by the light splitting element 32 toward the focus lens 12 at substantially a right angle. By further reflecting the light reflected by the light splitting element 32 by the reflection mirror 33 and aligning a direction with light penetrating the light splitting element 32, a direction in which the imaging devices 3A and 3B are connected to the optical unit 31 may be aligned.

The focus lenses 12 and 34 cooperate with the collimation lens 11 in a configuration of the relay optical system 5 that relays the primary image forming surface K1 of the optical microscope 2 to the secondary image forming surface K2 on the side of the imaging device. In the optical unit 31, a relay optical system 5A for the light of the long wavelength is configured by the collimation lens 11 and the focus lens 12, and a relay optical system 5B for the light of the short wavelength is configured by the collimation lens 11 and the focus lens 34.

The optical element holder 6 and the holder displacement portion 15 are disposed on the optical axis in the relay optical system 5A and on the optical axis in the relay optical system 5B, respectively. In addition, the Bertrand lens insertion/extraction portion 8 and the Bertrand lens displacement portion 21 are disposed on the rear stage side of the optical element holder 6 on a side of the relay optical system 5A and on the rear stage side of the optical element holder 6 on a side of the relay optical system 5B, respectively.

The Bertrand lens insertion/extraction portion 8 and the Bertrand lens displacement portion 21 on the side of the relay optical system 5A are disposed on a front stage side of the focus lens 12, and the Bertrand lens insertion/extraction portion 8 and the Bertrand lens displacement portion 21 on the side of the relay optical system 5B are disposed on a rear stage side of the focus lens 34. In addition, the Bertrand lens insertion/extraction portion 8 and the Bertrand lens displacement portion 21 on the side of the relay optical system 5A may be disposed on a rear stage side of the focus lens 12, and the Bertrand lens insertion/extraction portion 8 and the Bertrand lens displacement portion 21 on the side of the relay optical system 5B may be disposed on a front stage side of the focus lens 34.

Also in the optical unit 31 as described above, it is possible to adjust an image forming relationship between the light beams of the two wavelengths by applying the above-described method of adjusting the optical unit to each of the relay optical systems 5A and 5B. It is possible to dispose the exit pupil projection position P of the optical microscope 2 within a certain range on the optical axis in the relay optical systems 5A and 5B, by disposing the field lens 16 on the optical axis on the front stage side of the optical element holder 6. Since a gap between lenses configuring the relay optical system 5A and 5B and the lens diameter are reduced and a required diameter of the optical element M is reduced within a certain range by using the field lens 16, it is possible to avoid increasing the size of the optical unit 31. In addition, it is possible to check the exit pupil projection position P through the imaging device 3 by inserting the Bertrand lens 19 on the optical axis on the rear stage side of the optical element holder 6. Therefore, it is possible to easily adjust the disposition position of the optical element M with respect to various exit pupil projection positions P.

### Reference Signs List

1,31 Optical unit
2 Optical microscope
3 Imaging device
5, 5A, 5B Relay optical system
6 Optical element holder
15 Holder displacement portion
16 Field lens
18 Field lens displacement portion
7 Field lens disposition portion
19 Bertrand lens
8 Bertrand lens insertion/extraction portion 20 Bertrand lens holding portion
21 Bertrand lens displacement portion
32 Light splitting element
C Chart
K1 Primary image forming surface
K2 Secondary image forming surface
M Optical element
P Exit pupil projection position.

## Claims

1. An optical unit that is optically coupled between an optical microscope and an imaging device, the optical unit comprising:
a relay optical system configured to relay a primary image forming surface of the optical microscope to a secondary image forming surface of an imaging device;
an optical element holder disposed on an optical axis in the relay optical system;
a field lens disposition portion configured to dispose a field lens on the optical axis on a front stage side of the optical element holder; and
a Bertrand lens insertion/extraction portion configured to dispose a Bertrand lens on the optical axis on a rear stage side of the optical element holder so that insertion and extraction of the Bertrand lens are possible.

2. The optical unit of claim 1, wherein the Bertrand lens insertion/extraction portion has a Bertrand lens displacement portion that displaces a position of the Bertrand lens in an optical axis direction.

3. The optical unit of claim 2, wherein the Bertrand lens insertion/extraction portion has a plurality of Bertrand lens holding portions that hold the Bertrand lens, and
the Bertrand lens displacement portion is configured to be capable of displacing each position of the Bertrand lens holding portions in the optical axis direction.

4. The optical unit of any one of claims 1 to 3, wherein the field lens disposition portion has a field lens displacement portion that displaces a position of the field lens in the optical axis direction.

5. The optical unit of claim 4, wherein the field lens disposition portion has a plurality of field lens holding portions that hold the field lens, and
the field lens displacement portion is configured to be capable of displacing each position of the field lens holding portions in the optical axis direction.

6. The optical unit of any one of claims 1 to 5, further comprising:
a holder displacement portion configured to displace a position of the optical element holder in at least one of the optical axis direction and an in-surface direction of a surface orthogonal to the optical axis direction.

7. The optical unit of any one of claims 1 to 6, further comprising:
a light splitting element on the optical axis on the front stage side of the optical element holder.

8. A method of adjusting an optical unit that is optically coupled between an optical microscope and an imaging device, the method comprising:
a focus adjustment step of inserting a Bertrand lens on an optical axis on a rear stage side of a position of an optical element holder disposed on the optical axis in a relay optical system and adjusting a focus of the imaging device to the position of the optical element holder;
an exit pupil projection position adjustment step of disposing a field lens on the optical axis on a front stage side of the position of the optical element holder and adjusting an exit pupil projection position of the optical microscope to the position of the optical element holder; and
a Bertrand lens extraction step of extracting the Bertrand lens from the optical axis in a state in which the exit pupil projection position coincides with the position of the optical element holder.

9. The method of claim 8, wherein the exit pupil projection position adjustment step includes a step of displacing a position of the field lens along the optical axis direction or a step of changing the field lens to a field lens having a different focal distance.

10. The method of claim 8 or 9, wherein the exit pupil projection position adjustment step includes a step of forming an image of an aperture of the optical microscope on the imaging device.

11. The method of any one of claims 8 to 10, further comprising:
an optical element displacement step of disposing an optical element in the optical element holder and displacing the position of the optical element holder in at least one of the optical axis direction and an in-surface direction of a surface orthogonal to the optical axis direction, after the exit pupil projection position adjustment step.

12. A method of adjusting an optical unit that is optically coupled between an optical microscope and an imaging device, the method comprising:
a Bertrand lens insertion step of inserting a Bertrand lens on an optical axis on a rear stage side of a position of an optical element holder disposed on the optical axis in a relay optical system;
an exit pupil projection position rough adjustment step of disposing a field lens on the optical axis on a front stage of the position of the optical element holder and adjusting an exit pupil projection position of the optical microscope to a rough adjustment position where the exit pupil projection position of the optical microscope is roughly adjusted with respect to the position of the optical element holder;
a focus adjustment step of adjusting a focus of the imaging device to the rough adjustment position;
a holder adjustment step of adjusting the position of the optical element holder to the rough adjustment position; and
a Bertrand lens extraction step of extracting the Bertrand lens from the optical axis in a state in which the position of the optical element holder coincides with the rough adjustment position.

13. The method of claim 12, wherein the exit pupil projection position rough adjustment step includes a step of displacing a position of the field lens along the optical axis direction or a step of changing the field lens to a field lens having a different focal distance.

14. The method of claim 12 or 13, wherein the exit pupil projection position rough adjustment step includes a step of roughly forming an image of an aperture of the optical microscope on the imaging device.

15. The method of any one of claims 12 to 14, further comprising:
an optical element displacement step of disposing an optical element in the optical element holder and displacing the position of the optical element in at least one of the optical axis direction and an in-surface direction of a surface orthogonal to the optical axis direction, after the holder adjustment step.

16. The method of any one of claims 8 to 15, wherein the focus adjustment step includes a step of displacing a position of the Bertrand lens along the optical axis direction or a step of changing the Bertrand lens to a Bertrand lens having a different focal distance.

17. The method of any one of claims 8 to 16, wherein at least one of the steps is performed while imaging with the imaging device.

18. The method of any one of claims 8 to 11, wherein the focus adjustment step includes a step of disposing a chart on the optical element holder.
